# EUROPÄISCHE PATENTSCHRIFT

(11) **EP 2 419 466 B1**
(45) Veröffentlichungstag und Bekanntmachung des Hinweises auf die Patenterteilung: **13.09.2017**
(21) Anmeldenummer: 10711399.5
(22) Anmeldetag: 30.03.2010
(51) Int. Cl.: C08G 18/48, C08G 18/66, C08G 18/75, C08G 18/32, C08K 5/5415, C08L 75/06, C09J 175/08, C08G 18/08, C09J 175/06, C08L 23/08, C08L 29/04

(54) **KLEBSTOFF AUS POLYMEREN MIT KRISTALLINEN DOMÄNEN, AMORPHEM POLYURETHAN UND SILANVERBINDUNGEN**
ADHESIVE MADE OF POLYMERS HAVING CRYSTALLINE DOMAINS, AMORPHOUS POLYURETHANE AND SILANE COMPOUNDS
ADHÉSIF CONSTITUÉ DE POLYMÈRES COMPORTANT DES DOMAINES CRISTALLINS, UN POLYURÉTHANE AMORPHE ET DES COMPOSÉS SILANES

(30) Priorität: 14.04.2009 EP 09157864
(43) Veröffentlichungstag der Anmeldung: 22.02.2012
(73) Patentinhaber: BASF SE, 67056 Ludwigshafen am Rhein (DE)
(72) Erfinder: HARTZ, Oliver, 67117 Limburgerhof (DE); WEISS, Axel, 67346 Speyer (DE); SCHUMACHER, Karl-Heinz, 67433 Neustadt (DE); MEYER, Axel, 69115 Heidelberg (DE); AYDIN, Oral, 68165 Mannheim (DE)
(74) Vertreter: BASF IP Association
(86) Internationale Anmeldenummer: PCT/EP2010/054142
(87) Internationale Veröffentlichungsnummer: WO 2010/118948

(56) Entgegenhaltungen:
- EP-A1- 1 598 382
- WO-A1-2008/006733
- WO-A2-2007/082826
- US-A1- 2002 002 232
- US-A1- 2008 026 193

## Beschreibung

Die Erfindung betrifft die Verwendung eines Klebstoffs aus zwei Komponenten, wobei die erste Komponente mindestens zwei Polymere enthält, von denen mindestens eines der Polymere Carboxylgruppen aufweist und von denen ein erstes Polymer ausgewählt ist aus Polymeren, welche in der Lage sind, kristalline Domänen auszubilden, Copolymeren aus Ethylen und Vinylacetat und deren Gemisch und ein zweites Polymer ein amorphes Polyurethan ist und wobei die zweite Komponente mindestens eine gegenüber Carboxylgruppen reaktive Silanverbindung enthält. Der Klebstoff kann zur Herstellung folienkaschierter Formteile für den Automobilbau mit hoher Klimawechselbeständigkeit verwendet werden. Die Erfindung betrifft auch ein Verfahren zur Herstellung von folienkaschierten Formteilen für den Automobilbau unter Verwendung der Klebstoffe.

Zur Herstellung von Verbundkörpern für einen Einbau in Fahrzeuge, z.B. zur Herstellung von Innenauskleidungsteilen von Automobilen werden geeignete Kunststofffolien auf geformte Körper, z.B. aus Kunststoff, Metall oder Fasermaterialien mittels eines Klebstoffs dauerhaft aufgebracht. Hierfür können wässrige Dispersionsklebstoffe auf Basis von Polyurethanen eingesetzt werden. Zur Verbesserung der anwendungstechnischen Eigenschaften wurden häufig Isocyanate als Vernetzer eingesetzt. Gewünscht werden Isocyanat-freie Systeme. Aus der WO 2008/006733 sind wässrige Polyurethanklebstoffe mit Silanverbindungen als Additive bekannt. Bekannte Klebstoffdispersionen sind noch nicht in jeder Hinsicht optimal, insbesondere hinsichtlich Klima- und Temperaturbelastungsverhalten. US 2002/0002232 A1 beschreibt wässrige Polyurethanklebstoffe enthaltend ein erstes Polyurethan auf Basis eines (teil)kristallinen Polyesters, ein zweites Polyurethan auf Basis von Hexandiol, sowie ein Silan als Haftvermittler. Die Klebstoffe können zur Herstellung von Folienlaminaten verwendet werden. In Automobilen eingesetzte, geformte Verbundkörper sind häufig wechselnden Klima- und Temperaturbelastungen ausgesetzt. Dabei kann es vor allem im Bereich von Biegungen oder Krümmungen der Formteile mit der Zeit zum vorzeitigen Versagen der Verklebung kommen und die aufkaschierte Polymerfolie kann sich stellenweise von dem Formteil ablösen. Gewünscht sind daher Klebstoffe mit einer hohen Klimawechselbeständigkeit.

Aufgabe der Erfindung war, die anwendungstechnischen Eigenschaften von Polyurethandispersionen für die technische Kaschierung weiter zu verbessern, insbesondere hinsichtlich eines guten Klima- und Temperaturbelastungsverhaltens von Einbauteilen in Fahrzeugen.

Gegenstand der Erfindung ist die Verwendung eines Klebstoffs aus einer ersten, wässrigen Komponente und aus einer zweiten Komponente,
wobei die erste Komponente mindestens ein erstes Polymer und mindestens ein davon verschiedenes zweites Polymer enthält,
wobei das erste Polymer ausgewählt ist aus Polymeren, welche in der Lage sind, kristalline Domänen auszubilden (nachfolgend auch kristalline Polymere genannt), Copolymeren aus Ethylen und Vinylacetat und dem Gemisch dieser Polymere,
und das zweite Polymer ein amorphes Polyurethan ist, und
wobei mindestens eines der beiden Polymere Carboxylgruppen aufweist,
wobei das Gewichtsmengenverhältnis von erstem Polymer zu zweitem Polymer von 2:8 bis 8:2 beträgt, und
wobei die zweite Komponente mindestens eine gegenüber Carboxylgruppen reaktive Silanverbindung. Das erste Polymer ist insbesondere ein Polymer, welches gegenüber einem allein eingesetzten zweiten Polymer die Klimawechselbeständigkeit von mit dem Klebstoff hergestellten folienkaschierten Formteilen erhöht.

Die beiden Komponenten werden vorzugsweise bis vor der Anwendung auf einem Substrat getrennt gehalten und erst unmittelbar vor der Anwendung miteinander vermischt.

Gegenstand der Erfindung ist auch die Verwendung eines erfindungsgemäßen Klebstoffs zur Herstellung folienkaschierter Formteile für den Automobilbau mit hoher Klimawechselbeständigkeit bzw. zur Erhöhung der Klimawechselbeständigkeit von folienkaschierten Formteilen für den Automobilbau.

Hohe Klimawechselbeständigkeit bedeutet, dass sich nach mehr als einem, vorzugsweise mehr als fünf oder mehr als zehn, besonders bevorzugt mehr als 20 Testzyklen eines Klimawechseltests (1 Zyklus beinhaltet 4h Lagerung bei 90°C und 80 % Luftfeuchte, 2h Abkühlung auf -30°C, 4h Lagerung bei -30°C und 10 % rel. Luftfeuchte und 2h aufheizen auf 90°C) z.B. nach dem Test BMW PR 308.2 (2006-04) "Klimatische Prüfung von Klebeverbindungen" keine sichtbare Ablösung einer auf einen Prüfkörper geklebten Weich-PVC-Folie ergibt.

Ein Polymer, welches in der Lage ist, kristalline Domänen auszubilden, ist ein Polymer, das kristalline Domänen aufweist, wenn es bei Raumtemperatur (20°C) in reiner Form als Polymerfilm vorliegt. Der Polymerfilm kann dabei ganz oder teilweise aus kristallinen Domänen bestehen, d.h. er ist nicht vollständig amorph. Das Vorhandensein kristalliner Domänen ist durch DSC-Messungen feststellbar, beispielsweise durch Bestimmung der Schmelzenthalpie der Kristallite.

Vorzugsweise handelt es sich bei dem ersten Polymer um ein Polymer, welches eine Schmelzwärme von mindestens 20 J/g aufweist, wenn es als Polymerfilm vorliegt. Vorzugsweise ist das erste Polymer in reinem Zustand kristallin und hat einen Schmelzpunkt im Bereich von 30 bis 150 °C.

In einer Ausführungsform ist das erste Polymer ausgewählt aus der Gruppe bestehend aus
(i) kristalline Domänen ausbildenden Polyurethanen, welche von Polyesterdiolen abgeleitete Einheiten aufweisen und
(ii) Ethylen/Vinylacetat Copolymeren,
wobei das zweite Polymer ein amorphes Polyurethan ist, welches von Polyetherdiolen abgeleitete Einheiten aufweist.

In einer Ausführungsform ist das erste Polymer ein kristallines Polyurethan und weist von Polyesterdiolen abgeleitete Einheiten auf und das zweite Polymer ist ein amorphes Polyurethan und weist von Polyetherdiolen abgeleitete Einheiten auf, wobei mindestens eines der beiden Polyurethane Carboxylgruppen aufweist und das Gewichtsmengenverhältnis der Summe aller von Polyesterdiolen abgeleiteten Einheiten zur Summe aller von Polyetherdiolen abgeleiteten Einheiten vorzugsweise von 2:9 bis 7:2 beträgt. Vorzugsweise enthält die erste Komponente des Klebstoffs
(a) 20-80 Gewichtsteile, vorzugsweise 40-70 Gewichtsteile mindestens eines ersten Polymers, ausgewählt aus (i) kristalline Domänen ausbildenden Polyurethanen mit von Polyesterdiolen abgeleiteten Einheiten und ohne von Polyetherdiolen abgeleiteten Einheiten und (ii) Ethylen/Vinylacetat Copolymeren oder deren Gemisch,
(b) 20-80 Gewichtsteile mindestens eines amorphen Polyurethans mit von Polyetherdiolen abgeleiteten Einheiten und ohne von Polyesterdiolen abgeleiteten Einheiten und
(c) 0-50 Gewichtsteile, vorzugsweise 10 bis 40 Gewichtsteile weiterer, von (a) und (b) verschiedener Polymere, z.B. Polyvinylacetat oder Polyacrylatcopolymerdispersionen oder Styrol/Butadien Dispersionen.

Vorzugsweise ist das erste Polymer ein Polyurethan und aufgebaut aus
a) Diisocyanaten,
b) Polyesterdiolen mit einem Molgewicht von größer 500 bis 5000 g/mol,
c) Carbonsäuregruppen aufweisenden Diolen, und
d) optional weiteren, von a)-c) verschiedenen, ein- oder mehrwertigen Verbindungen mit reaktiven Gruppen, ausgewählt aus alkoholischen Hydroxygruppen, primären Aminogruppen, sekundären Aminogruppen und Isocyanatgruppen.

Bevorzugt sind Polyurethane, bei welchen die Polyestereinheiten 80-90 Gew.% des Polymers ausmachen.

Vorzugsweise ist das zweite Polymer ein Polyurethan, welches aufgebaut ist aus
a) Diisocyanaten,
b) Polyetherdiolen mit einem Molgewicht von 240 bis 5000 g/mol,
c) Carbonsäuregruppen aufweisenden Diolen, und
d) optional weitere, von a)-c) verschiedene, ein- oder mehrwertige Verbindungen mit reaktiven Gruppen, ausgewählt aus alkoholischen Hydroxygruppen, primären Aminogruppen, sekundären Aminogruppen und Isocyanatgruppen.

Bevorzugt sind Polyurethane, bei welchen die Polyethereinheiten 70-80 Gew.% des Polymers ausmachen.

Vorzugsweise sind die Polyetherdiole des zweiten Polymers ausgewählt aus Polytetrahydrofuran und Polypropylenoxid. Vorzugsweise sind die Polyesterdiole des ersten Polymers ausgewählt aus Umsetzungsprodukten zweiwertiger Alkohole mit zweiwertigen Carbonsäuren und Polyesterdiolen auf Lacton-Basis.

Vorzugsweise sind die Polyurethane jeweils zu mindestens 40 Gew.-%, besonders bevorzugt zu mindestens 60 Gew.-% und ganz besonders bevorzugt zu mindestens 80 Gew.-% aus Diisocyanaten, Polyetherdiolen bzw. Polyesterdiolen aufgebaut. Bevorzugt enthält das erste Polyurethan Polyesterdiole in einer Menge von mehr als 10 Gew.-%, besonders bevorzugt größer 30 Gew. %, insbesondere größer 40 Gew. % oder größer 50 Gew. %, ganz besonders bevorzugt größer 60 Gew. %, bezogen auf das erste Polyurethan. Bevorzugt enthält das zweite Polyurethan Polyetherdiole in einer Menge von mehr als 10 Gew.-%, besonders bevorzugt größer 30 Gew. %, insbesondere größer 40 Gew. % oder größer 50 Gew. %, ganz besonders bevorzugt größer 60 Gew. %, bezogen auf das zweite Polyurethan.

In einer Ausführungsform enthält die erste Komponente mindestens 40 Gew.-% (amorphe bzw. einer Mischung aus amorphen und kristallinen) Polyurethane, bezogen auf den Feststoffgehalt. In einer weiteren Ausführungsform enthält die erste Komponente, bezogen auf den Feststoffgehalt, 10 bis 75 Gew.-Teile Ethylen/Vinylacetat Copolymere als erstes Polymer.

Vorzugsweise ist zumindest das erste Polyurethan in reinem Zustand kristallin. Das erste Polyurethan hat vorzugsweise. einen Schmelzpunkt größer 30 °C, insbesondere größer 40 °C, besonders bevorzugt größer 50 °C oder auch größer 60 oder größer 70 °C; im Allgemeinen ist der Schmelzpunkt nicht größer als 150 °C, insbesondere nicht größer als 100 °C. Der Schmelzpunkt liegt daher insbesondere in einem Bereich von 30 bis 150 °C, besonders bevorzugt von 40 bis 150, und ganz besonders bevorzugt von 50 bis 100 °C und insbesondere von 50 bis 80 °C. Das zweite Polyurethan ist in reinem Zustand amorph. Das erste Polyurethan hat vorzugsweise eine Schmelzenthalpie von mehr als 20 J/g. Die Messung des Schmelzpunktes und der Schmelzenthalpie erfolgt dabei nach der Methode der Differential Scanning Calorimetry. Die Messung erfolgt an Polyurethanfilmen einer Dicke von 200 µm, die vor der Messung in einem Umluft-Trockenschrank bei 40 °C 72 Stunden getrocknet wurden. Zur Vorbereitung der Messung werden ca. 13 mg des Polyurethans in Pfännchen gefüllt. Die Pfännchen werden verschlossen, die Proben auf 120 °C aufgeheizt, mit 20 K/min abgekühlt und 20 Stunden bei 20 °C getempert. Die so vorbereiteten Proben werden nach der DSC-Methode nach DIN 53765 vermessen, wobei die Probe mit 20 K/min aufgeheizt wird. Als Schmelztemperatur wird die Peaktemperatur gemäß DIN 53765 ausgewertet, die Schmelzenthalpie wird wie in Bild 4 der DIN 53765 ermittelt.

Geeignete Diisocyanate sind beispielsweise solche der Formel X(NCO)2, wobei X für einen aliphatischen Kohlenwasserstoffrest mit 4 bis 15 C-Atomen, einen cycloaliphatischen oder aromatischen Kohlenwasserstoffrest mit 6 bis 15 C-Atomen oder einen araliphatischen Kohlenwasserstoffrest mit 7 bis 15 C-Atomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische. Derartige Diisocyanate sind im Handel erhältlich.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 1:9 bis 9:1, insbesondere 4 : 1 bis 1 : 4 beträgt.

Zum Aufbau der Polyurethane kann man als Verbindungen außer den vorgenannten auch Isocyanate einsetzen, die neben den freien Isocyanatgruppen weitere verkappte Isocyanatgruppen, z. B. Uretdiongruppen tragen.

Im Hinblick auf gute Filmbildung und Elastizität kommen als Polyesterdiole und als Polyetherdiole vornehmlich höhermolekulare Diole in Betracht, die ein Molekulargewicht von über 500 und bis zu 5000, vorzugsweise von etwa 1000 bis 3000 g/mol haben. Es handelt sich hierbei um das zahlenmittlere Molgewicht Mn. Mn ergibt sich durch Bestimmung der Anzahl der Endgruppen (OH-Zahl).

Polyesterdiole sind z. B. aus Ullmanns Enzyklopädie der technischen Chemie, 4. Auflage, Band 19, S. 62 bis 65 bekannt. Bevorzugt werden Polyesterdiole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH2)y-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als zweiwertige Alkohole kommen z. B. Ethylenglykol, Propan-1,2- diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH2)x-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Zusätzlich zu den Polyesterdiolen oder zu den Polyetherdiolen können gegebenenfalls auch Polycarbonat-Diole, wie sie z. B. durch Umsetzung von Phosgen mit einem Überschuss von den als Aufbaukomponenten für die Polyesterpolyole genannten niedermolekularen Alkohole erhalten werden können, mitverwendet werden.

Gegebenenfalls können auch Polyesterdiole auf Lacton-Basis verwendet werden, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)z-COOH ableiten, wobei z eine Zahl von 1 bis 20 ist und ein H-Atom einer Methyleneinheit auch durch einen C₁- bis C₄-Alkylrest substituiert sein kann. Beispiele sind e-Caprolacton, ß-Propiolacton, g-Butyrolacton und/oder Methyl-e-caprolacton sowie deren Gemische. Geeignete Starterkomponenten sind z. B. die vorstehend als Aufbaukomponente für die Polyesterpolyole genannten niedermolekularen zweiwertigen Alkohole. Die entsprechenden Polymerisate des e-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Polyetherdiole sind insbesondere durch Polymerisation von Ethylenoxid, Propylenoxid, Butylenoxid, Tetrahydrofuran, Styroloxid oder Epichlorhydrin mit sich selbst, z. B. in Gegenwart von BF3 oder durch Anlagerung dieser Verbindungen gegebenenfalls im Gemisch oder nacheinander, an Startkomponenten mit reaktionsfähigen Wasserstoffatomen, wie Alkohole oder Amine, z. B. Wasser, Ethylenglykol, Propan-1,2-diol, Propan-1,3-diol, 2,2-Bis(4-hydroxyphenyl)-propan oder Anilin erhältlich. Besonders bevorzugt sind Polypropylenoxid, Polytetrahydrofuran eines Molekulargewichts von 240 bis 5000, und vor allem 500 bis 4500. Bevorzugt sind Polyetherdiole, die zu weniger als 20 Gew.-% aus Ethylenoxid bestehen.

Gegebenenfalls können auch Polyhydroxyolefine mitverwendet werden, bevorzugt solche mit 2 endständigen Hydroxylgruppen, z. B. α,-ω-Dihydroxypolybutadien, α,-ω-Dihydroxypolymethacrylester oder α,-ω-Dihydroxypolyacrylester als Monomere (c1). Solche Verbindungen sind beispielsweise aus der EP-A 622 378 bekannt. Weitere geeignete Polyole sind Polyacetale, Polysiloxane und Alkydharze.

Die Härte und das Elastizitätsmodul der Polyurethane lassen sich, falls erforderlich, erhöhen, wenn als Diole neben den Polyesterdiolen bzw. neben den Polyetherdiolen noch davon verschiedene, niedermolekulare, monomere Diole mit einem Molekulargewicht von etwa 60 bis 500, vorzugsweise von 62 bis 200 g/mol, eingesetzt werden. Als niedermolekulare monomere Diole werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer geradzahligen Anzahl von C-Atomen sowie Pentan-1,5-diol und Neopentylglykol bevorzugt werden. Beispiele sind Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)x-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Bevorzugt beträgt der Anteil der Polyesterdiole bzw. der Polyetherdiole, bezogen auf die Gesamtmenge aller Diole, 10 bis 100 mol-% und der Anteil der niedermolekularen, monomeren Diole, bezogen auf die Gesamtmenge aller Diole, 0 bis 90 mol-%. Besonders bevorzugt beträgt das Verhältnis der polymeren Diole zu den monomeren Diolen 0,1 : 1 bis 5:1, besonders bevorzugt 0,2 : 1 bis 2 : 1.

Um eine Wasserdispergierbarkeit der Polyurethane zu erreichen, können die Polyurethane zusätzlich Monomere als Aufbaukomponente enthalten, die wenigstens eine Isocyanatgruppe oder wenigstens eine gegenüber Isocyanatgruppen reaktive Gruppe und darüber hinaus wenigstens eine hydrophile Gruppe oder eine Gruppe, die sich in eine hydrophile Gruppe überführen lässt, tragen. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen. Der Anteil der Komponenten mit (potentiell) hydrophilen Gruppen an der Gesamtmenge aller Aufbaukomponenten der Polyurethane wird im allgemeinen so bemessen, dass die Molmenge der (potentiell) hydrophilen Gruppen, bezogen auf die Gewichtsmenge aller Monomere, 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln. Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im Allgemeinen 0 bis 10, bevorzugt 0 bis 6 Gew.-%, bezogen auf die Gewichtsmenge aller Monomere. Bevorzugte Monomere mit nichtionischen hydrophilen Gruppen sind Polyethylenoxiddiole mit mindestens 20 Gew.-% Ethylenoxid, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US-A 3,905,929 und US-A 3,920,598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammoniumgruppen, insbesondere protonierte tertiäre Aminogruppen oder quartäre Ammoniumgruppen. Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z. B. Carbonsäuregruppen oder tertiäre Aminogruppen. (Potentiell) ionische Monomere sind z. B. in Ullmanns Enzyklopädie der technischen Chemie, 4. Auflage, Band 19, S.311-313 und beispielsweise in der DE-A 1 495 745 ausführlich beschrieben.

Als (potentiell) kationische Monomere sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 C-Atomen bestehen. Weiterhin kommen tertiäre Stickstoffatome aufweisende Polyether mit vorzugsweise zwei endständigen Hydroxylgruppen, wie sie z. B. durch Alkoxylierung von zwei an Aminstickstoff gebundene Wasserstoffatome aufweisende Amine, z. B. Methylamin, Anilin oder N,N'-Dimethylhydrazin, in an sich üblicher Weise zugänglich sind, in Betracht. Derartige Polyether weisen im Allgemeinen ein zwischen 500 und 6000 g/mol liegendes Molgewicht auf. Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁- bis C₆-Alkylhalogeniden oder Benzylhalogeniden, z. B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 C-Atomen, wie sie auch in der US-A 3,412,054 beschrieben sind. Insbesondere sind Verbindungen der allgemeinen Formel (c1) 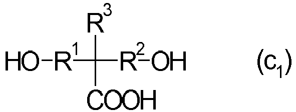 in welcher R¹ und R² für eine C₁- bis C₄-Alkandiyl-(Einheit) und R³ für eine C₁- bis C₄-Alkyl-(Einheit) steht und vor allem Dimethylolpropionsäure (DMPA) bevorzugt. Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 39 11 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Mindestens eines der Polyurethane, vorzugsweise sowohl das erste als auch das zweite Polyurethan, weisen Carboxylgruppen auf. Die Carboxylgruppen können in die Polyurethane eingeführt werden durch die vorstehend genannten aliphatischen, cycloaliphatischen, araliphatischen oder aromatischen Carbonsäuren, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 C-Atomen, insbesondere Dimethylolpropionsäure.

Als weitere Monomere mit gegenüber Isocyanaten reaktiven Aminogruppen kommen Aminocarbonsäuren wie Lysin, β-Alanin oder die in der DE-A 20 34 479 genannten Addukte von aliphatischen diprimären Diaminen an a,ß-ungesättigte Carbon- oder Sulfonsäuren in Betracht. Solche Verbindungen gehorchen beispielsweise der Formel (c2)

H2N-R4-NH-R5-X (c2)

in der R⁴ und R⁵ unabhängig voneinander für eine C₁- bis C₆-Alkandiyl-Einheit, bevorzugt Ethylen und X für COOH oder SO₃H stehen. Besonders bevorzugte Verbindungen der Formel (c2) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist. Weiterhin besonders bevorzugt sind die Addukte der oben genannten aliphatischen diprimären Diamine an 2-Acrylamido-2-methylpro-pansulfonsäure, wie sie z. B. in der DE-B 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Neutralisierungsmittel sind z. B. Ammoniak, NaOH, Triethanolamin (TEA) Triisopropylamin (TIPA) oder Morpholin, bzw. dessen Derivate. Besonders bevorzugt liegen die Sulfonat- oder Carboxylatgruppen in Form ihrer Salze mit einem Alkaliion oder einem Ammoniumion als Gegenion vor.

Mehrwertige Monomere, welche gegebenenfalls auch Bestandteile des Polyurethans sind, dienen im Allgemeinen der Vernetzung oder der Kettenverlängerung. Es sind im Allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen. Alkohole mit einer höheren Wertigkeit als 2, die zur Einstellung eines gewissen Verzweigungs- oder Vernetzungsgrades dienen können, sind z. B. Trimethylolpropan, Glycerin oder Zucker. Ferner kommen Monoalkohole in Betracht, die neben der Hydroxylgruppe eine weitere gegenüber Isocyanaten reaktive Gruppe tragen wie Monoalkohole mit einer oder mehreren primären und/oder sekundären Aminogruppen, z. B. Monoethanolamin. Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt. Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan. Die Amine können auch in blockierter Form, z. B. in Form der entsprechenden Ketimine (siehe z. B. CA-A 1 129 128), Ketazine (vgl. z. B. die US-A 4,269,748) oder Aminsalze (s. US-A 4,292,226) eingesetzt werden. Auch Oxazolidine, wie sie beispielsweise in der US-A 4,192,937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden. Bevorzugt werden Gemische von Di- und Triaminen verwendet, besonders bevorzugt Gemische von Isophorondiamin (IPDA) und Diethylentriamin (DETA). Die Polyurethane enthalten bevorzugt 1 bis 30, besonders bevorzugt 4 bis 25 mol-%, bezogen auf die Gesamtmenge aller Aufbaukomponenten eines Polyamins mit mindestens 2 gegenüber Isocyanaten reaktiven Aminogruppen. Für den gleichen Zweck können auch höher als zweiwertige Isocyanate eingesetzt werden. Handelsübliche Verbindungen sind beispielsweise das Isocyanurat oder das Biuret des Hexamethylendiisocyanats.

Einwertige Monomere, die gegebenenfalls mitverwendet werden, sind Monoisocyanate, Monoalkohole und monoprimäre und -sekundäre Amine. Im Allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, welche die Dispergierung bzw. die Vernetzung oder weitere polymeranaloge Umsetzung des Polyurethans ermöglichen. In Betracht kommen hierfür Monomere wie Isopropenyl-a,a-dimethylbenzylisocyanat (TMI) und Ester von Acryl- oder Methacrylsäure wie Hydroxyethylacrylat oder Hydroxyethylmethacrylat.

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann. Normalerweise werden die Komponenten sowie ihre jeweiligen Molmengen so gewählt, dass das Verhältnis A : B mit
A der Molmenge an Isocyanatgruppen und
B der Summe aus der Molmenge der Hydroxylgruppen und der Molmenge der funktionellen Gruppen, die mit Isocyanaten in einer Additionsreaktion reagieren können,
   0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1. Die eingesetzten Monomere tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Aufbaukomponenten zur Herstellung des Polyurethans erfolgt vorzugsweise bei Reaktionstemperaturen von bis zu 180 °C, bevorzugt bis zu 150 °C unter Normaldruck oder unter autogenem Druck. Die Herstellung von Polyurethanen, bzw. von wässrigen Polyurethandispersionen ist dem Fachmann bekannt. Ethylen/Vinylacetat Copolymere im Sinne der Erfindung sind Copolymere, welche überwiegend, d.h. zu mehr als 50 Gew.%, vorzugsweise zu mindestens 60 Gew.% oder auch zu 100 Gew.% aus Ethylen- und Vinylacetatmonomeren aufgebaut sind. Das Ethylen/Vinylacetat-Gewichtsverhältnis ist dabei vorzugsweise kleiner oder gleich 1, insbesondere kleiner als 0,66 oder kleiner als 0,4. Weitere Monomere können z.B. Acrylsäureester oder Methacrylsäureester in Mengen von 0 bis kleiner 50 Gew.%, insbesondere von 1 bis kleiner 35 Gew.% sein.

Die Polyurethane und die Ethylen/Vinylacetat Copolymere liegen vorzugsweise als wässrige Dispersion vor und werden in dieser Form verwendet.

Die in dem erfindungsgemäß zu verwendenden Klebstoff eingesetzte Silanverbindung hat vorzugsweise die Formel 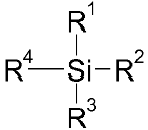 worin R¹ bis R⁴ unabhängig voneinander für einen organischen Rest oder für eine Hydroxygruppe stehen, mit der Maßgabe, dass mindestens zwei der Gruppen R¹ bis R⁴ für Gruppen, ausgewählt aus Hydroxygruppen und Alkoxygruppen, stehen und mindestens eine der übrigen Gruppen R¹ bis R⁴ für einen organischen Rest steht, der mindestens eine funktionelle Gruppe enthält, ausgewählt aus primären Aminogruppen, sekundären Aminogruppen, Säuregruppen, Säureanhydridgruppen, Carbamatgruppen, Isocyanatgruppen, Hydroxylgruppen und Epoxygruppen.

Vorzugsweise stehen zwei oder drei, besonders bevorzugt drei der Gruppen R¹ bis R⁴ für eine Hydroxygruppe oder eine Alkoxygruppen. Im Allgemeinen handelt es sich um Alkoxygruppen, bei der späteren Verwendung hydrolysieren die Alkoxygruppen dann zu Hydroxygruppen, die dann weiter reagieren, bzw. vernetzen. Insbesondere handelt es sich um eine C₁ bis C₉ -, vorzugsweise um eine C₁ bis C₆ -, besonders bevorzugt um eine C₁ bis C₃ Alkoxygruppe, ganz besonders bevorzugt handelt es sich um eine Methoxy- oder Ethoxygruppe, insbesondere um eine Methoxygruppe.

Die übrigen Gruppen R¹ bis R⁴ stehen für einen organischen Rest, dessen Molgewicht im allgemeinen kleiner 500 g/mol, insbesondere kleiner 200 g/mol, besonders bevorzugt kleiner 150 bzw. kleiner 100 g/mol ist. Bei den übrigen Gruppen R¹ bis R⁴ kann es sich z. B. um aliphatische oder aromatische Kohlenwasserstoffgruppen oder Kohlenwasserstoffgruppen mit sowohl aliphatischen, auch cycloaliphatischen, als auch aromatischen Bestandteilen handeln. Mindestens eine der übrigen Gruppen R¹ bis R⁴ steht für einen organischen Rest, der mindestens eine funktionelle Gruppe, ausgewählt aus einer primären oder sekundären Aminogruppe, einer Säuregruppe, Säureanhydridgruppe, Carbamatgruppe, Hydroxylgruppe, Isocyanatgruppe oder einer Epoxygruppe, enthält. Als funktionelle Gruppe besonders bevorzugt sind die primäre oder sekundäre Aminogruppe, Epoxygruppe, insbesondere Glycidylgruppe, oder die Carbamatgruppe. Besonders bevorzugt ist die Epoxygruppe, insbesondere Glycidylgruppe. Die übrigen Gruppen R¹ bis R⁴ können auch mehrere funktionelle Gruppen enthalten, z. B. zwei primäre Aminogruppen, zwei sekundäre Aminogruppen oder eine primäre und eine sekundäre Aminogruppe.

Bei bevorzugten Silane stehen drei der Reste R¹ bis R⁴ für eine Hydroxy- oder Alkoxygruppe (vorzugsweise Alkoxygruppe, siehe oben) und der eine übrige Rest für einen organischen Rest mit mindestens einer funktionellen Gruppe. Ebenfalls bevorzugt sind Silane, bei denen zwei der Reste R¹ bis R⁴ für eine Hydroxy- oder Alkoxygruppe (vorzugsweise Alkoxygruppe, siehe oben) und die beiden übrigen Reste jeweils für einen organischen Rest mit mindestens einer funktionellen Gruppe stehen. Besonders bevorzugt sind Glycidoxyalkyltrialkoxysilane mit jeweils 1 bis 5 C-Atomen in den Alkyl- und Alkoxygruppen. Als Silane in Betracht kommen beispielsweise 3-Glycidoxypropyltrimethoxysilan, 3-Glycidoxypropyltriethoxysilan, N-(2-Aminoethyl)-3-aminopropyl-trimethoxysilan, 3-(Triethoxysilyl)propylbernsteinsäureanhydrid, N-Trimethoxysilylmethyl-O-methyl-carbamat.

Geeignete Silane sind insbesondere niedermolekular und haben ein Molgewicht unter 5000, insbesondere unter 2000, besonders bevorzugt unter 1000 und ganz besonders bevorzugt unter 500 g/mol; das Molgewicht liegt im allgemeinen oberhalb 50 insbesondere oberhalb 100, bzw. 150 g/mol.

Die Silanverbindungen werden vorzugsweise in Mengen von mehr als 0,2, insbesondere mehr als 1 oder mehr als 2 Gew. Teilen auf 100 Gew. Teile Polyurethan, und vorzugsweise maximal 30, insbesondere maximal 20, besonders bevorzugt maximal 10 Gew. Teilen auf 100 Gew.-Teile Polyurethan eingesetzt.

Ein Hauptbestandteil der ersten Klebstoffkomponente ist die Mischung der ersten und zweiten Polymere als Bindemittel. Die erste Klebstoffkomponente besteht vorzugsweise zu mindestens 20 Gew. %, besonders bevorzugt zu mindestens 30 Gew. %, ganz besonders bevorzugt zu mindestens 40 Gew. % und insbesondere zu mindestens 50 Gew. %, bzw. zu mindestens 70 Gew. % aus der Mischung der ersten und zweiten Polymere, bezogen auf den Feststoffgehalt, d. h. ohne Wasser oder sonstige bei 21 °C und 1 bar flüssige Lösemittel. Die erste Klebstoffkomponente ist wässrig, das heißt sie enthält Wasser als überwiegendes oder einziges Lösemittel oder Dispergiermittel.

Die erste Klebstoffkomponente kann allein aus der Mischung der ersten und zweiten Polymere bestehen, abgesehen von Wasser oder sonstigen Lösemitteln, die bei der Trocknung entweichen. Sie kann aber auch weitere Zusatzstoffe enthalten, z. B. weitere Bindemittel, Stabilisatoren, Füllstoffe, Verdicker, Benetzungshilfsmittel, Entschäumer, Vernetzer, Alterungsschutzmittel, Fungizide, Pigmente, lösliche Farbstoffe, Mattierungsmittel und Neutralisationsmittel. Weitere Zusatzstoffe können in einfacher Weise zur Mischung der ersten und zweiten Polymere, bzw. zu deren wässrigen Dispersion gegeben werden. Als Stabilisatoren sind grundsätzlich solche Stabilisatoren geeignet, wie sie bei wässrigen Dispersionen üblicherweise verwendet werden. Zu sehr lagerstabilen Polymerdispersionszusammensetzungen führen Stabilisatoren ausgewählt aus der Gruppe umfassend Netzmittel, Cellulose, Polyvinylalkohol, Polyvinylpyrrolidon sowie Mischungen davon. Gegenstand der Erfindung ist daher auch ein wie oben beschriebener Klebstoff, dadurch gekennzeichnet, dass er mindestens einen weiteren Zusatzstoff enthält der ausgewählt ist aus weiteren Bindemitteln, Stabilisatoren, Füllstoffen, Verdickern, Benetzungshilfsmitteln, Entschäumern, Vernetzern, Alterungsschutzmitteln, Fungiziden, Pigmenten, löslichen Farbstoffen, Mattierungsmitteln und Neutralisationsmitteln.

Als weitere Bindemittel, die im Gemisch mit den ersten und zweiten Polymeren verwendet werden können, kommen insbesondere radikalisch polymerisierte Polymere, vorzugsweise in Form ihrer wässrigen Dispersionen in Betracht. Derartige Polymere bestehen vorzugsweise zu mindestens 60 Gew.- % aus sogenannten Hauptmonomeren, ausgewählt aus C₁ bis C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren. Als Polymere insbesondere zu erwähnen sind solche, die zu mehr als 60 Gew.-% aus C₁-C₂₀ Alkyl(meth)-acrylaten aufgebaut sind (Polyacrylate), oder solche, die zu mehr als 60 Gew. % aus Styrol und 1,3-Butadien bestehen (Styrol/Butadien Copolymere, insbesondere carboxylierte Styrol/Butadien Copolymere). Carboxylierte Styrol/Butadien Copolymere sind gebildet aus Styrol, Butadien und mindestens einem ethylenisch ungesättigten, radikalisch polymerisierbaren Monomer mit mindestens einer Carboxylgruppe, z.B. Acrylsäure, Methacrylsäure, Fumarsäure, Itaconsäure etc., vorzugsweise Acrylsäure.

In einer besonderen Ausführungsform enthält der Klebstoff neben den ersten und zweiten Polymeren keine weiteren Arten von Bindemitteln. In einer anderen Ausführungsform enthält der Klebstoff 10 bis 50 Gew.-Teile, oder 20 bis 50 Gew.-Teile, oder 30 bis 50 Gew.-Teile, bezogen auf die Summe aller Klebstoffpolymere, an von den ersten und zweiten Polymeren verschiedenen, weiteren Bindemitteln, vorzugsweise Polyacrylate und/oder Styrol/Butadien Copolymere..

Bei den weiteren Bestandteilen des Klebstoffs kann es sich z. B. auch um weitere Vernetzer handeln. In Betracht kommen z. B. chemisch blockierte Isocyanate, verkapselte Isocyanate, verkapselte Uretdione, Biurete oder Allophanate oder Verbindungen mit Carbodiimidgruppen. Der zusätzliche Vernetzer kann an das Polyurethan gebunden sein, es kann sich aber auch um eine Verbindung handeln, die im Polyurethan gelöst oder verteilt ist. Der Klebstoff benötigt zur Erreichung der gewünschten Eigenschaften keine weiteren Vernetzer, vorzugsweise enthält der Klebstoff daher auch keine weiteren Vernetzer.

Besonders vorteilhaft sind Zusammensetzungen, welche frei von organischen Lösungsmitteln, insbesondere frei von sogenannten VOCs (Volatile Organic Compounds) und/oder frei von Weichmachern sind. Sowohl Weichmacher als auch organische Lösungsmittel sind vom ökotoxikologischen und arbeitshygienischen Standpunkt aus nachteilig. Weichmacher können an die Oberfläche migrieren und zum Versagen einer Verklebung führen oder dazu führen, dass die Oberfläche klebrig wird, was zu Verschmutzungen der Klebfugen führt. Auch Lösungsmittel sind unerwünscht, da sie einerseits zusätzliches Gefahrenpotential beim Aufheizen und bei der Applikation des Klebstoffs mit sich bringen können und weil sie andererseits ebenfalls migrieren und über lange Zeit an die Umwelt und an Materialien, welche in Kontakt mit dem Klebstoff stehen, abgegeben werden können und diese negativ beeinflussen können, beziehungsweise zum Versagen der Verklebung führen. Daher handelt es sich bei der ersten Klebstoffkomponente vorzugweise um ein rein wässriges System mit Wasser als einzigem Lösungsmittel bzw. als einzigem Dispersionsmedium. Der Feststoffgehalt, das heißt der Gehalt aller Bestandteile außer Wasser oder sonstigen, bei 21 °C und 1 bar flüssigen Stoffen liegt vorzugsweise zwischen 20 und 80 Gew.-%.

Gegenstand der Erfindung ist auch die Verwendung einer Zusammensetzung, die mindestens ein erstes Polymer und mindestens ein davon verschiedenes zweites Polymer enthält, wobei das erste Polymer ausgewählt ist aus Polymeren, welche in der Lage sind, kristalline Domänen auszubilden und Copolymeren aus Ethylen und Vinylacetat, und das zweite Polymer ein amorphes Polyurethan ist, und wobei mindestens eines der beiden Polymere Carboxylgruppen aufweist, wobei das Gewichtsmengenverhältnis von erstem Polymer zu zweitem Polymer von 2:8 bis 8:2 beträgt, zur Herstellung eines oben beschriebenen Klebstoffs. Gegenstand der Erfindung ist auch die Verwendung eines oben beschriebenen Klebstoffs zur Herstellung folienkaschierter Formteile für den Automobilbau mit hoher Klimawechselbeständigkeit.

Der Klebstoff kann als zweikomponentiger (2K) Klebstoff verwendet werden. Bei einem 2K Klebstoff wird vor der Verwendung noch ein weiterer Zuatzstoff, im Allgemeinen ein Vernetzer, im vorliegenden Fall das Silan, zugesetzt. Besonders geeignet ist der Klebstoff als Kaschierklebstoff, insbesondere zur Herstellung von Verbundkörpern durch dauerhafte Verklebung von großflächigen, biegsamen ersten Substraten auf festen Formkörpern als zweitem Substrat. Die großflächigen ersten Substrate sind insbesondere ausgewählt aus Polymerfolien, Papier, Metallfolien, Holzfurnier und Faservliesen aus natürlichen oder synthetischen Fasern. Sie werden miteinander oder vorzugsweise mit festen Formkörpern, z. B. Formteilen aus Metall, lackiertem Metall, Holz, Holzwerkstoffen, Fasermaterialien oder Kunststoff verklebt.

Gegenstand der Erfindung ist auch ein Verfahren zur Herstellung von folienkaschierten Formteilen, insbesondere für den Automobilbau, wobei
a) eine oben beschriebene erste Klebstoffkomponente und eine oben beschriebene zweite Klebstoffkomponente, eine Polymerfolie und ein z.B. für den Einbau in ein Automobil vorgesehenes Formteil zur Verfügung gestellt werden,
b) die Klebstoffkomponenten vermischt werden und auf die Polymerfolie und/oder auf das Formteil aufgebracht werden und
c) anschließend die Polymerfolie unter Druck und/oder Temperaturerhöhung mit dem Formteil verklebt wird.

Erfindungsgemäß hergestellte Verbundkörper können zwischen erstem Substrat und Klebstoffschicht und/oder zwischen zweitem Substrat und Klebstoffschicht zusätzlich Primerschichten zur Haftverbesserung aufweisen. Die zu verklebenden Substrate oder Formteile können mit Haftvermittlern vorbehandelt sein. Aufgrund der bereits guten Hafteigenschaften Klebstoffe ist die Anwendung von Primern aber nicht unbedingt erforderlich.

Besonders bevorzugt als erstes Substrat sind Polymerfolien. Als Polymerfolie werden insbesondere biegsame flächige Kunststoffe in einer Dicke von 0.05 Millimeter bis 5 Millimeter verstanden, die sich aufrollen lassen. Somit werden neben "Folien" im strengen Sinn von Dicken unter 1 mm, auch Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Derartige Kunststofffolien werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein. Der Kunststoff der Polymerfolien ist vorzugsweise ein thermoplastischer Kunststoff, z.B. Polyester, wie Polyethylenterephthalat (PET), thermoplastische Polyolefine (TPO) wie Polyethylen, Polypropylen, Polyvinylchlorid, insbesondere Weich-PVC, Polyacetate, Ethylen/Vinylacetat Copolymere (EVA), ASA(Acrylnitril/Styrol/Acrylsäureester), PUR (Polyurethan), PA (Polyamid), Poly(meth)acrylate, Polycarbonate, oder deren Kunststofflegierungen, insbesondere auch geschäumte PVC-Folien und geschäumte thermoplastische Polyolefinfolien (TPO). Besonders bevorzugt sind PVC und thermoplastische Polyolefine (TPO).

Bei den Formteilen kann es sich auch um Formteile handeln, welche aus synthetischen oder natürlichen Fasern oder Spänen aufgebaut sind, die durch ein Bindemittel zu einem Formteil gebunden sind; insbesondere sind auch Formteile aus Kunststoff, z. B. ABS, geeignet. Die Formteile können eine beliebige Form haben.

Die Beschichtung der Substrate oder Formteile mit dem Klebstoff kann nach üblichen Auftragsverfahren erfolgen, beispielsweise durch ein Sprüh-, Streich-, Rakel-, Stempel-, Walz- oder Gießauftragsverfahren. Bevorzugt ist ein Sprühauftrag.

Die aufgebrachte Klebstoffmenge beträgt vorzugsweise 0,5 bis 100 g/m2, besonders bevorzugt 2 bis 80 g/m2, ganz besonders bevorzugt 10 bis 70 g/m2, bezogen auf Klebstoff. Vorzugsweise wird entweder nur ein zu verklebendes Substrat, z.B. nur die Folie oder nur das Formteil einseitig beschichtet. Es kommt jedoch auch eine Beschichtung beider zu verklebender Substrate, bzw. von Folie und Formteil in Betracht. Nach der Beschichtung erfolgt üblicherweise eine Trocknung, vorzugsweise bei Raumtemperatur oder Temperaturen bis zu 80 °C, um Wasser oder sonstige Lösemittel zu entfernen.

Das mit einer oder zwei Klebstoffkomponenten beschichtete Substrat oder Formteil kann vor der Verklebung gelagert werden. Flexible Substrate können z. B. auf Rollen aufgewickelt werden. Zur Verklebung werden die zu verklebenden Teile zusammengefügt. Der Klebstoff wird thermisch aktiviert. Die Temperatur in der Klebstoffschicht beträgt vorzugsweise mindestens 30°C oder mindestens 50 °C, z.B. von 30 bis 200 °C, oder von 50 bis 180°C oder von 60 bis 80°C. Die Verklebung erfolgt vorzugsweise unter Druck. Dazu können z.B. die zu verklebenden Teile mit einem Druck von mindestens 0,005 oder mindestens 0,01 oder mindestens 0,08 N/mm2, z.B. 0,005 bis 5 N/mm2 oder 0,01 bis 0,8 N/mm2 zusammengepresst werden. Der Anpressdruck kann z.B. durch das Anlegen eines Unterdruckes zwischen Folie und Substrat oder durch Luftdruck erzeugt.

Die erhaltenen Verbundkörper zeichnen sich durch hohe mechanische Festigkeit auch bei erhöhten Temperaturen (Wärmestandfestigkeit) oder unter sich stark ändernden Klimabedingungen (Klimabeständigkeit) aus.

Besondere Bedeutung hat das erfindungsgemäße Verfahren für die Herstellung von Einbauteilen für Fahrzeuge. Besonders bevorzugt ist die Verwendung des Klebstoffs für die Herstellung von Innenauskleidungsteilen für Automobile. Bespiele für derartige Innenauskleidungsteile sind Türinnenverkleidungen, Schalttafeln, Armaturenbretter, Hutablagen, Fertighimmel, Schiebehimmel, Mittelkonsolen, Handschuhfächer, Sonnenblenden, Säulen, Tür- und Armgriffe, Boden-, Ladeboden- und Kofferraumgruppen sowie Schlafkabinen- und Rückwände der Liefer- und Lastkraftwagen. Hierfür wird insbesondere ein Vakuumtiefziehverfahren oder eine Presskaschierung im Siegelverfahren verwendet. Beim Vakuumtiefziehverfahren wird der Klebstoff auf den Formkörper aufgetragen. Anschließend erfolgt gegebenenfalls ein Ablüften, z.B. bei Raumtemperatur oder im Trockenkanal bei vorzugsweise maximal 40°C. Typischerweise wird die aufzuklebende Folie, z.B. eine Dekorfolie aus luftundurchlässigem Material, in einem Rahmen luftdicht eingespannt. Unterhalb der Folie befindet sich eine Unterform auf die der Formkörper gelegt wird. Unterform und Formkörper sind durchbohrt beziehungsweise luftdurchlässig. Das Gerät ist unterwärts weiter luftdicht abgeschlossen. Beim Absaugen der Luft aus dieser Vorrichtung schmiegt sich nun die Folie unter dem auf seine Oberfläche lastenden atmosphärischen Druck passgenau auf den Formkörper. Die Folie wird vor dem Anlegen des Vakuums, bzw. Unterdruckes, erhitzt. Die Folie ist wegen des zu erzeugenden Vakuums, bzw. Unterdruckes, luftundurchlässig. Beim Presskaschierungsverfahren wird der Klebstoff ebenfalls auf dem Formkörper und gegebenenfalls auf der zur verklebenden Folie aufgetragen, zumindest jedoch auf dem Formkörper. Anschließend erfolgt gegebenenfalls ein Ablüften, typischerweise bei Raumtemperatur oder im Trockenkanal bei vorzugsweise maximal 40°C. Die Verklebung von Formkörpern mit der Folie erfolgt nach Wärmeaktivierung unter Fügen und Pressen. Die hier benutzten Folien sind vielfach Kunststoffdekorfolien und weisen eine Oberflächenstruktur auf. Diese Oberflächenstruktur auf der Kunststofffolie kann beispielsweise vor, während oder nach dem Verkleben eingeprägt werden.

### Beispiele

Alle Prozentangaben sind Gewichtsangangaben, wenn nichts anderes angegeben ist. Die Angabe eines Gehalts bezieht sich auf den Gehalt in wässriger Lösung oder Dispersion. Die Bestimmung der Viskosität kann nach DIN EN ISO 3219 bei einer Temperatur von 23 °C mit einem Rotationsviskosimeter erfolgen.

### Einsatzstoffe:

### Silan: 3-Glycidoxypropyltrimethoxysilan, erhältlich als Geniosil^{®} GF 80 (Wacker-Chemie GmbH)

### Kristallines Polyurethan:

Luphen^{®} D 207 E; wässrige Dispersion eines Polyester-Polyurethan-Elastomeren mit von Polyesterdiolen abgeleiteten Einheiten, welche von BASF SE als Klebrohstoff für technische Kaschierungen vermarktet wird. Nach Verfilmung der Dispersion entsteht ein Polymerfilm, welcher kristalline Domänen enthält.
Feststoffgehalt 45 Gew.%; pH 6,5-8,5; Viskosität 50-180 mPa s (23°C, 250 s⁻¹).

### amorphes Polyurethan, PU-1:

Dispersion eines Polyurethans, hergestellt aus Poly(tetrahydrofuran) mit Molekulargewicht Mn ca. 2000, Dimethylolpropionsäure, Isophorondiisocyanat und Isophorondiamin, neutralisiert mit Triethylamin. Nach Verfilmung der Dispersion entsteht ein Polymerfilm, welcher keine kristalline Domänen enthält.
Feststoffgehalt 50 Gew.%, K-Wert 40, Viskosität 68 mPas, pH 6,8 (23°C).

### amorphes Polyurethan, PU-2:

Dispersion eines Polyurethans, hergestellt aus Poly(propylenoxid) mit Molekulargewicht Mn ca. 2000, Dimethylolpropionsäure, Neopentylglykol, Toluylendiisocyanat, neutralisiert mit NaOH. Nach Verfilmung der Dispersion entsteht ein Polymerfilm, welcher keine kristallinen Domänen enthält.
Feststoffgehalt 40 Gew.%, K-Wert 47, Viskosität 167 mPas, pH 7,6.

### Ethylen/Vinylacetat Copolymer:

Airflex® EP 17; 60 gew.%ige Dispersion eines Ethylen/Vinylacetat Copolymers; Viskosität 3800 +/- 1000 mPa s (Brookfield RVT, Spindel 3, 20 U/min); pH 4-5 (23°C)

### Herstellung der Klebstoffe:

Die Dispersionskomponenten (siehe Tabelle 1) werden in einem Rührgefäß vorgelegt und das Silan anschließend eingerührt. Die mit V gekennzeichneten Klebstoffe sind nicht erfindungsgemäße Vergleichszusammensetzungen.

**Tabelle 1:**

| Klebstoff | erstes Polymer ¹⁾ | zweites Polymer¹⁾ | Silan |
|---|---|---|---|
| K1 | 52,1% Luphen^{®} D 207E | 46,9% PU-1 | 1,0% |
| K2 | 45,0% Airflex ® EP 17 | 54,0% PU-1 | 1,0% |
| K3 | 43,3% Airflex ® EP 17 | 51,7% PU-2 | 5,0% |
| V1 | - | 99,0% PU-1 | 1,0% |
| V2 | - | 95,0% PU-1 | 5,0% |
| V3 | 52,7% Luphen^{®} D 207E | 47,3% PU-1 | - |
| V4 | 45,5% Airflex ® EP 17 | 54,5% PU-1 | - |
| V5 | 52,7% Luphen^{®} D 207E | 47,3% PU-2 | - |
| V6 | 45,5% Airflex ® EP 17 | 54,5% PU-2 | - |

| | | | |
|---|---|---|---|
| ¹⁾ Mengenangaben in Gew.-%, bezogen auf Feststoffgehalt | | | |

### Prüfung der Beständigkeit im Klimawechseltest

100-110 g /m² des Klebstoffes (nass) wurden auf ein Formteil (Rocholl GmbH, Narbung: Ford Flour Grain 89/030, 40 µm) bestehend aus ABS (Sabic, Cycolac G360 Standardschwarz), welches zur Herstellung von Autoinnenteilen verwendet wird, mit Hilfe eines Druckluftzerstäubers (Krautzberger GmbH, HS-25 HVLP) aufgebracht und 90 Minuten bei Raumtemperatur getrocknet. Das Formteil ist V-förmig im Querschnitt. Die Länge der Außenkante beträgt 200 mm, die der Breite 145 mm. Der Winkel in der Mitte der Außenkante beträgt 105°. Eine Folie aus Weich-PVC (Benecke Kaliko, Yorn", Material-Nr. V3569838Z1750A, Farbe: schwarz, Dicke: 1,2 mm, Länge 160 mm) wurde auf das ABS Substrat kaschiert. Die thermoaktivierte Kaschierung erfolgte mit Hilfe einer Thermoform-Unterkolbenpresse (Bürkle, Modell Lamp 0909/60)-Presse in einem Vakuumtiefziehkaschierprozess. Nach einer Vorwärmzeit von 80 s und Anlegen von Vakuum innerhalb 60 s wurde bei 4,5 bar 45 Sekunden bei einer Presstemperatur von 121 °C kaschiert.

Das kaschierte Formteil wurde in einem Klimaprüfschrank (Weiss Umwelttechnik GmbH, SB/22/300/40) folgendem Testzyklus ausgesetzt:
1) 4 Stunden Lagerung bei 90 °C (80% rel. Luftfeuchtigkeit)
2) 2 Stunden Abkühlung auf -30 °C
3) 4 Stunden Lagerung bei -30 °C (10% rel. Luftfeuchtigkeit)
4) 2 Stunden Aufheizen auf 90 °C

Nach Durchlauf eines vollständigen Testzyklus wird der Verbundkörper auf Ablösung der Weich-PVC-Folie vom Substrat überprüft. Der Testzyklus wird solange wiederholt, bis erste Ablösungen sichtbar werden. Zur Auswertung wird die maximale Anzahl an Testzyklen festgehalten, welche ein Verbundkörper ohne Ablösungen besteht. Die Ergebnisse sind in Tabelle 2 zusammengefasst.

**Tabelle 2:**

| Klebstoff | Anzahl Zyklen ohne Ablösung |
|---|---|
| K1 | 24 |
| K2 | 18 |
| K3 | 14 |
| V1 | 0 |
| V2 | 0 |
| V3 | 0 |
| V4 | 0 |
| V5 | 0 |
| V6 | 0 |

Die Tabelle 2 zeigt deutlich die Vorteile der erfindungsgemäßen Verwendung der indem die Verbundkörper deutlich besseres Verhalten in Bezug auf Klimawechselbeständigkeit aufweisen als die Vergleichszusammensetzungen.

## Patentansprüche

1. Verwendung einer Zusammensetzung aus einer ersten, wässrigen Komponente und aus einer zweiten Komponente als Klebstoff, wobei die erste Komponente mindestens ein erstes Polymer und mindestens ein davon verschiedenes zweites Polymer enthält,
wobei das erste Polymer ausgewählt ist aus Polymeren, welche in der Lage sind, kristalline Domänen auszubilden, Copolymeren aus Ethylen und Vinylacetat und deren Gemisch,
und das zweite Polymer ein amorphes Polyurethan ist,
und wobei mindestens eines der beiden Polymere Carboxylgruppen aufweist, wobei das Gewichtsmengenverhältnis von erstem Polymer zu zweitem Polymer von 2:8 bis 8:2 beträgt, und
wobei die zweite Komponente mindestens eine gegenüber Carboxylgruppen reaktive Silanverbindung enthält und wobei das zweite Polymer ein amorphes Polyurethan ist, welches von Polyetherdiolen abgeleitete Einheiten aufweist.

2. Verwendung gemäß Anspruch 1, **dadurch gekennzeichnet, dass** das erste Polymer eine Schmelzwärme von mindestens 20 J/g gemessen nach DIN 53765 aufweist, wenn es als Polymerfilm vorliegt.

3. Verwendung gemäß einem der vorhergehenden Ansprüche, **dadurch gekennzeichnet, dass** das erste Polymer ausgewählt ist aus der Gruppe bestehend aus kristalline Domänen ausbildenden Polyurethanen, welche von Polyesterdiolen abgeleitete Einheiten aufweisen und Ethylen/Vinylacetat Copolymeren.

4. Verwendung gemäß einem der vorhergehenden Ansprüche, **dadurch gekennzeichnet, dass** das erste Polymer ein Polyurethan ist und von Polyesterdiolen abgeleitete Einheiten aufweist und das zweite Polymer ein Polyurethan ist und von Polyetherdiolen abgeleitete Einheiten aufweist,
und wobei mindestens eines der beiden Polyurethane Carboxylgruppen aufweist, wobei das Gewichtsmengenverhältnis der Summe aller von Polyesterdiolen abgeleiteten Einheiten zur Summe aller von Polyetherdiolen abgeleiteten Einheiten von 2:9 bis 7:2 beträgt.

5. Verwendung gemäß einem der vorhergehenden Ansprüche, **dadurch gekennzeichnet, dass** die erste Komponente
(a) 20-80 Gewichtsteile mindestens eines ersten Polymers, ausgewählt aus (i) kristalline Domänen ausbildenden Polyurethanen mit von Polyesterdiolen abgeleiteten Einheiten und ohne von Polyetherdiolen abgeleiteten Einheiten und (ii) Ethylen/Vinylacetat Copolymeren oder deren Gemisch,
(b) 20-80 Gewichtsteile mindestens eines amorphen Polyurethans mit von Polyetherdiolen abgeleiteten Einheiten und ohne von Polyesterdiolen abgeleiteten Einheiten und
(c) 0-50 Gewichtsteile weiterer, von (a) und (b) verschiedener Polymere enthält.

6. Verwendung gemäß einem der vorhergehenden Ansprüche, **dadurch gekennzeichnet, dass** das erste Polymer eine Polyurethan ist, aufgebaut aus
a) Diisocyanaten,
b) Polyesterdiolen mit einem Molgewicht von größer 500 bis 5000 g/mol,
c) Carbonsäuregruppen aufweisenden Diolen, und
d) optional weitere, von a)-c) verschiedene, ein- oder mehrwertige Verbindungen mit reaktiven Gruppen, ausgewählt aus alkoholischen Hydroxygruppen, primären Aminogruppen, sekundären Aminogruppen und Isocyanatgruppen,
und das zweite Polymer aufgebaut ist aus
a) Diisocyanaten,
b) Polyetherdiolen mit einem Molgewicht von 240 bis 5000 g/mol,
c) Carbonsäuregruppen aufweisenden Diolen, und
d) optional weitere, von a)-c) verschiedene, ein- oder mehrwertige Verbindungen mit reaktiven Gruppen, ausgewählt aus alkoholischen Hydroxygruppen, primären Aminogruppen, sekundären Aminogruppen und Isocyanatgruppen.

7. Verwendung gemäß einem der vorhergehenden Ansprüche, **dadurch gekennzeichnet, dass** das zweite Polymer ein Polyurethan ist, welches von Polyetherdiolen abgeleitete Einheiten aufweist und die Polyetherdiole ausgewählt sind aus Polytetrahydrofuran und Polypropylenoxid und dass das erste Polymer ein Polyurethan ist und von Polyesterdiolen abgeleitete Einheiten aufweist und die Polyesterdiole ausgewählt sind aus Umsetzungsprodukten zweiwertiger Alkohole mit zweiwertigen Carbonsäuren und Polyesterdiolen auf Lacton-Basis.

8. Verwendung gemäß einem der vorhergehenden Ansprüche, **dadurch gekennzeichnet, dass** die Silanverbindung die Formel 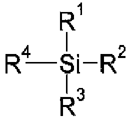 aufweist, worin R¹ bis R⁴ unabhängig voneinander für einen organischen Rest oder für eine Hydroxygruppe stehen, mit der Maßgabe, dass mindestens zwei der Gruppen R¹ bis R⁴ für Gruppen, ausgewählt aus Hydroxygruppen und Alkoxygruppen, stehen und mindestens eine der übrigen Gruppen R¹ bis R⁴ für einen organischen Rest steht, der mindestens eine funktionelle Gruppe enthält, ausgewählt aus primären Aminogruppen, sekundären Aminogruppen, Säuregruppen, Säureanhydridgruppen, Carbamatgruppen, Isocyanatgruppen, Hydroxylgruppen und Epoxygruppen.

9. Verwendung gemäß dem vorhergehenden Anspruch, **dadurch gekennzeichnet, dass** zwei oder drei der Gruppen R¹ bis R⁴ für eine Alkoxygruppe stehen.

10. Verwendung gemäß einem der vorhergehenden Ansprüche, **dadurch gekennzeichnet, dass** die Silanverbindung ein Glycidoxyalkyltrialkoxysilan ist mit jeweils 1 bis 5 C-Atomen in den Alkylgruppen und in den Alkoxygruppen.

11. Verwendung gemäß einem der vorhergehenden Ansprüche, **dadurch gekennzeichnet, dass** mehr als 0,2 und maximal 30 Gew.-Teile des Silans auf 100 Gew.-Teile Polymere eingesetzt werden.

12. Verwendung gemäß einem der vorhergehenden Ansprüche, **dadurch gekennzeichnet, dass** er mindestens einen weiteren Zusatzstoff enthält der ausgewählt ist aus weiteren Bindemitteln, Stabilisatoren, Füllstoffen, Verdickern, Benetzungshilfsmitteln, Entschäumern, Vernetzern, Alterungsschutzmitteln, Fungiziden, Pigmenten, löslichen Farbstoffen, Mattierungsmitteln und Neutralisationsmitteln.

13. Verwendung gemäß einem der vorhergehenden Ansprüche, **dadurch gekennzeichnet, dass** die Polyurethane in Wasser dispergiert sind, es sich also um eine wässrige Polyurethandispersion handelt.

14. Verwendung gemäß einem der vorhergehenden Ansprüche, **dadurch gekennzeichnet, dass** das erste Polymer ein in reinem Zustand kristallines Polyurethan ist und einen Schmelzpunkt im Bereich von 30 bis 150 °C hat.

15. Verwendung eines Klebstoffs gemäß einem der Ansprüche 1 bis 14 zur Herstellung folienkaschierter Formteile für den Automobilbau mit hoher Klimawechselbeständigkeit.

16. Verfahren zur Herstellung von folienkaschierten Formteilen für den Automobilbau, wobei
a) eine erste Klebstoffkomponente und eine zweite Klebstoffkomponente gemäß einem der Ansprüche 1 bis 14, eine Polymerfolie und ein für den Einbau in ein Automobil vorgesehenes Formteil zur Verfügung gestellt werden,
b) die Klebstoffkomponenten vermischt werden und auf die Polymerfolie und/oder auf das Formteil aufgebracht werden und
c) anschließend die Polymerfolie unter Druck und/oder Temperaturerhöhung mit dem Formteil verklebt wird.

17. Verbundkörper aus einem festen Formkörper auf welchen eine flexible Folie mit einem Klebstoff gemäß einem der Ansprüche 1 bis 14 geklebt ist.

## Claims

1. The use of a composition comprising a first, aqueous component and comprising a second component as an adhesive, the first component comprising at least one first polymer and at least one different second polymer,
the first polymer being selected from polymers capable of forming crystalline domains, copolymers of ethylene and vinyl acetate, and a mixture thereof,
and the second polymer being an amorphous polyurethane,
and at least one of the two polymers containing carboxyl groups,
the quantitative weight ratio of the first polymer to second polymer being from 2:8 to 8:2, and
the second component comprising at least one silane compound that is reactive toward carboxyl groups and the second polymer being an amorphous polyurethane which has units derived from polyether diols.

2. The use according to claim 1, wherein the first polymer has a heat of fusion of at least 20 J/g, measured according to DIN 53765, when present in the form of a polymer film.

3. The use according to either of the preceding claims, wherein the first polymer is selected from the group consisting of polyurethanes which form crystalline domains and which have units derived from polyester diols, and from ethylene/vinyl acetate copolymers.

4. The use according to any of the preceding claims, wherein the first polymer is a polyurethane and has units derived from polyester diols, and the second polymer is a polyurethane and has units derived from polyether diols,
and at least one of the two polyurethanes contains carboxyl groups, the quantitative weight ratio of the sum of all of the units derived from polyester diols to the sum of all of the units derived from polyether diols being from 2:9 to 7:2.

5. The use according to any of the preceding claims, wherein the first component comprises
(a) 20-80 parts by weight of at least one first polymer selected from (i) crystalline-domain-forming polyurethanes with units derived from polyester diols and without units derived from polyether diols, and (ii) ethylene/vinyl acetate copolymers or a mixture thereof,
(b) 20-80 parts by weight of at least one amorphous polyurethane with units derived from polyether diols and without units derived from polyester diols, and
(c) 0-50 parts by weight of further polymers different from (a) and (b).

6. The use according to any of the preceding claims, wherein the first polymer is a polyurethane synthesized from
a) diisocyanates,
b) polyester diols having a molar weight of greater than 500 to 5000 g/mol,
c) diols containing carboxylic acid groups, and
d) optionally further, non-a) -c), monofunctional or polyfunctional compounds having reactive groups selected from alcoholic hydroxyl groups, primary amino groups, secondary amino groups, and isocyanate groups,
and the second polymer is synthesized from
a) diisocyanates,
b) polyether diols having a molar weight of 240 to 5000 g/mol,
c) diols containing carboxylic acid groups, and
d) optionally further, non-a) -c), monofunctional or polyfunctional compounds having reactive groups selected from alcoholic hydroxyl groups, primary amino groups, secondary amino groups, and isocyanate groups.

7. The use according to any of the preceding claims, wherein the second polymer is a polyurethane which has units derived from polyether diols, and the polyether diols are selected from polytetrahydrofuran and polypropylene oxide, and wherein the first polymer is a polyurethane and has units derived from polyester diols, and the polyester diols are selected from reaction products of dihydric alcohols with dibasic carboxylic acids, and lactone-based polyester diols.

8. The use according to any of the preceding claims, wherein the silane compound has the formula 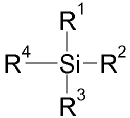 in which R¹ to R⁴ each independently are an organic radical or a hydroxyl group, with the proviso that at least two of the groups R¹ to R⁴ are groups selected from hydroxyl groups and alkoxy groups, and at least one of the remaining groups R¹ to R⁴ is an organic radical which contains at least one functional group selected from primary amino groups, secondary amino groups, acid groups, acid anhydride groups, carbamate groups, isocyanate groups, hydroxyl groups, and epoxy groups.

9. The use according to the preceding claim, wherein two or three of the groups R¹ to R⁴ are an alkoxy group.

10. The use according to any of the preceding claims, wherein the silane compound is a glycidyloxyalkyltrialkoxysilane having in each case 1 to 5 C atoms in the alkyl groups and in the alkoxy groups.

11. The use according to any of the preceding claims, wherein more than 0.2 and not more than 30 parts by weight of the silane are used per 100 parts by weight of polymers.

12. The use according to any of the preceding claims, which comprises at least one further additive selected from further binders, stabilizers, fillers, thickeners, wetting assistants, defoamers, crosslinkers, aging inhibitors, fungicides, pigments, soluble dyes, matting agents, and neutralizing agents.

13. The use according to any of the preceding claims, wherein the polyurethanes are in dispersion in water, and the system is therefore an aqueous polyurethane dispersion.

14. The use according to any of the preceding claims, wherein the first polymer is a polyurethane which is crystalline in the pure state and has a melting point in the range from 30 to 150°C.

15. The use of an adhesive according to any of claims 1 to 14 for producing film-laminated moldings for automobile construction with high resistance to climatic cycling.

16. A method of producing film-laminated moldings for automobile construction, where
a) a first adhesive component and a second adhesive component according to any of claims 1 to 14, a polymer film, and a molding intended for installation in an automobile are made available,
b) the adhesive components are mixed and the mixture is applied to the polymer film and/or to the molding, and
c) subsequently the polymer film is bonded to the molding under pressure and/or temperature increase.

17. A composite comprising a solid shaped body to which a flexible film is adhered with an adhesive according to any of claims 1 to 14.

## Revendications

1. Utilisation d'une composition constituée par un premier composant aqueux et un deuxième composant en tant qu'adhésif, le premier composant contenant au moins un premier polymère et au moins un deuxième polymère différent de celui-ci,
le premier polymère étant choisi parmi les polymères qui sont en mesure de former des domaines cristallins, les copolymères d'éthylène et d'acétate de vinyle et leur mélange,
et le deuxième polymère étant un polyuréthane amorphe, et au moins un des deux polymères comprenant des groupes carboxyle,
le rapport entre les quantités en poids du premier polymère et du deuxième polymère étant de 2:8 à 8:2, et le deuxième composant contenant au moins un composé de silane réactif avec les groupes carboxyle et le deuxième polymère étant un polyuréthane amorphe, qui comprend des unités dérivées de polyéther-diols.

2. Utilisation selon la revendication 1, **caractérisée en ce que** le premier polymère présente une chaleur de fusion d'au moins 20 J/g, mesurée selon DIN 53765, lorsqu'il se présente sous la forme d'un film polymère.

3. Utilisation selon l'une quelconque des revendications précédentes, **caractérisée en ce que** le premier polymère est choisi dans le groupe constitué par les polyuréthanes formant des domaines cristallins qui comprennent des unités dérivées de polyester-diols, et les copolymères d'éthylène-acétate de vinyle.

4. Utilisation selon l'une quelconque des revendications précédentes, **caractérisée en ce que** le premier polymère est un polyuréthane et comprend des unités dérivées de polyester-diols et le deuxième polymère est un polyuréthane et comprend des unités dérivées de polyéther-diols,
au moins un des deux polyuréthanes comprenant des groupes carboxyle, le rapport entre les quantités en poids de la somme de toutes les unités dérivées de polyester-diols et la somme de toutes les unités dérivées de polyéther-diols étant de 2:9 à 7:2.

5. Utilisation selon l'une quelconque des revendications précédentes, **caractérisée en ce que** le premier composant contient
(a) 20 à 80 parties en poids d'au moins un premier polymère, choisi parmi (i) les polyuréthanes formant des domaines cristallins contenant des unités dérivées de polyester-diols et sans unités dérivées de polyéther-diols et (ii) les copolymères d'éthylène/acétate de vinyle ou leur mélange,
(b) 20 à 80 parties en poids d'au moins un polyuréthane amorphe contenant des unités dérivées de polyéther-diols et sans unités dérivées de polyester-diols, et
(c) 0 à 50 parties en poids d'autres polymères différents de (a) et (b).

6. Utilisation selon l'une quelconque des revendications précédentes, **caractérisée en ce que** le premier polymère est un polyuréthane, formé à partir de
a) des diisocyanates,
b) des polyester-diols ayant un poids moléculaire de plus de 500 à 5 000 g/mol,
c) des diols comprenant des groupes acide carboxylique et
d) éventuellement d'autres composés mono- ou polyvalents différents de a) à c), contenant des groupes réactifs choisis parmi les groupes hydroxy alcooliques, les groupes amino primaires, les groupes amino secondaires et les groupes isocyanate,
et le deuxième polymère est formé à partir de
a) des diisocyanates,
b) des polyéther-diols ayant un poids moléculaire de 240 à 5 000 g/mol,
c) les diols comprenant des groupes acide carboxylique et
d) éventuellement d'autres composés mono- ou polyvalents différents de a) à c), contenant des groupes réactifs choisis parmi les groupes hydroxy alcooliques, les groupes amino primaires, les groupes amino secondaires et les groupes isocyanate.

7. Utilisation selon l'une quelconque des revendications précédentes, **caractérisée en ce que** le deuxième polymère est un polyuréthane qui comprend des unités dérivées de polyéther-diols et les polyéther-diols sont choisis parmi le polytétrahydrofurane et le polyoxyde de propylène, et **en ce que** le premier polymère est un polyuréthane et comprend des unités dérivées de polyester-diols et les polyester-diols sont choisis parmi les produits de réaction d'alcools bivalents avec des acides carboxyliques bivalents et les polyester-diols à base de lactone.

8. Utilisation selon l'une quelconque des revendications précédentes, **caractérisée en ce que** le composé de silane présente la formule 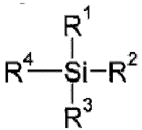 dans laquelle R¹ à R⁴ représentent indépendamment les uns des autres un radical organique ou un groupe hydroxy, à condition qu'au moins deux des groupes R¹ à R⁴ représentent des groupes choisis parmi les groupes hydroxy et les groupes alcoxy, et au moins un des groupes R¹ à R⁴ restants représente un radical organique qui contient au moins un groupe fonctionnel choisi parmi les groupes amino primaires, les groupes amino secondaires, les groupes acide, les groupes anhydride d'acide, les groupes carbamate, les groupes isocyanate, les groupes hydroxyle et les groupes époxy.

9. Utilisation selon la revendication précédente, **caractérisée en ce que** deux ou trois des groupes R¹ à R⁴ représentent un groupe alcoxy.

10. Utilisation selon l'une quelconque des revendications précédentes, **caractérisée en ce que** le composé de silane est un glycidoxyalkyltrialcoxysilane contenant à chaque fois 1 à 5 atomes C dans les groupes alkyle et dans les groupes alcoxy.

11. Utilisation selon l'une quelconque des revendications précédentes, **caractérisée en ce que** plus de 0,2 et au plus 30 parties en poids du silane sont utilisées pour 100 parties en poids de polymères.

12. Utilisation selon l'une quelconque des revendications précédentes, **caractérisée en ce qu'**elle contient au moins un additif supplémentaire choisi parmi les liants supplémentaires, les stabilisateurs, les charges, les épaississants, les adjuvants de mouillage, les démousseurs, les agents de réticulation, les agents antivieillissement, les fongicides, les pigments, les colorants solubles, les agents matants et les agents de neutralisation.

13. Utilisation selon l'une quelconque des revendications précédentes, **caractérisée en ce que** les polyuréthanes sont dispersés dans l'eau, et il s'agit donc d'une dispersion aqueuse de polyuréthane.

14. Utilisation selon l'une quelconque des revendications précédentes, **caractérisée en ce que** le premier polymère est un polyuréthane cristallin à l'état pur et a un point de fusion dans la plage allant de 30 à 150 °C.

15. Utilisation d'un adhésif selon l'une quelconque des revendications 1 à 14 pour la fabrication de pièces moulées revêtues d'un film pour la construction d'automobiles présentant une résistance élevée aux changements de climat.

16. Procédé de fabrication de pièces moulées revêtues d'un film pour la construction d'automobiles, selon lequel
a) un premier composant adhésif et un deuxième composant adhésif selon l'une quelconque des revendications 1 à 14, un film polymère et une pièce moulée prévue pour l'incorporation dans une automobile sont mis à disposition,
b) les composants adhésifs sont mélangés et appliqués sur le film polymère et/ou sur la pièce moulée, puis
c) le film polymère est collé avec la pièce moulée sous une pression et/ou avec élévation de la température.

17. Corps composite constitué d'un corps moulé solide sur lequel un film flexible est collé avec un adhésif selon l'une quelconque des revendications 1 à 14.
